# EUROPEAN PATENT APPLICATION

(11) **EP 2 818 596 A2**
(43) Date of publication of application: **31.12.2014**
(21) Application number: 14173628.0
(22) Date of filing: 24.06.2014
(51) Int. Cl.: E02F 3/36, F16L 37/34, F16L 37/56

(54) **Multi-coupling device with automatic pressure discharge system**

(30) Priority: 24.06.2013 IT MI20131045
(71) Applicant: Faster S.p.A., 26027 Rivolta D'Adda (IT)
(72) Inventor: Rossetti, Daniele, 26010 Dovera (IT); Sorbi, Roberto, 26027 Rivolta d'Adda (IT)
(74) Representative: Lualdi, Lorenzo

(57) **Abstract**

The present invention relates to a multi-coupling device (1) of the plate type for simultaneously connecting a plurality of hydraulic, electrical and pneumatic lines by means of quick couplings. The device (1) according to the present invention is characterized in that it comprises, in the main body (1a) of the multi-coupling plate (2), a drainage line (10) which hydraulically connects the seats of all the female couplings (3), and in that it comprises at least one female coupling (3) provided with automatic means (10a, 33, 34) for draining the pressurized fluid, adapted to automatically deviate the fluid flow towards the drainage line (10) when the female couplings (3) are not connected to a male coupling (4), thus avoiding the dangerous accumulation of pressurized fluid in the female couplings (3).

## Description

### FIELD OF THE INVENTION

The present invention relates to a multi-coupling device of the plate type for simultaneously connecting a plurality of hydraulic, electrical and pneumatic lines by means of quick couplings.

### BACKGROUND ART

The need to simultaneously connect a plurality of lines, whether hydraulic, electrical and/or pneumatic lines, has now been consolidated for a long time in various industrial fields. In particular, in the agricultural field for connecting forks, buckets, forklifts and farm equipment in general to be connected to a tractor, for example; in the construction sector, for the earth moving equipment used for asphalt covering or for cementation; in hydraulic breakers and the like; in the transport industry, for connecting to a snowplough vehicle blade, articulated lorries and the like, and so on.

The particularly strong need to connect several hydraulic, electrical and pneumatic lines in an effective and safe manner for the operator performing such an operation thus emerges from the above considerations; that is to say while saving time, avoiding fluid leakages or air inclusions in the lines during the connecting and disconnecting steps, and avoiding dangerous connecting errors such as, for example, the reversal of two lines.

Various technical solutions have been developed in response to these needs, including a multi-connection plate known on the market with the trade name "Multifaster" and, for certain aspects, subject matter of Italian Patent IT1271165, and for other aspects, subject matter of European Patents EP0787905B1 and EP0522493B2, all assigned to the same Applicant. Such a multi-connection plate consists of two connection plates, one of which is connected to an auxiliary device to be connected, and therefore it is mobile, while the other is generally connected to the vehicle or apparatus to which said auxiliary device is to be connected, and therefore it is fixed.

Therefore, each plate accommodates a plurality of quick couplings. In particular, the fixed plate is preferably provided with flat-face female couplings, while the mobile plate is provided with corresponding flat-face male couplings. From 1 to 12 hydraulic, electrical and pneumatic lines simultaneously exist on these plates. Each user generally has an outflow line and an inflow line, hence two pairs of couplings are required for each user.

The fixed plate in particular, i.e. that connected to the source vehicle or machinery releasing energy and/or pressurized fluids, has been the object of specific design attention as its surface has been made so as to be completely flat to allow easy and fast cleaning thereof.

The connection plate of the auxiliary device, the mobile one, generally has construction elements such as for example connector pins, fittings for connecting hydraulic piping and electrical connectors, positioned so as to protrude from the lower surface of the mobile connection plate, while the fixed connection plate assembled, as indicated, on the vehicle or apparatus is provided with holes and seats for introducing said pins and fittings, as well as with electrical connectors accommodated inside the body of the fixed plate, which therefore has a flat, smooth surface. Thereby, the surface of the flat plate may be easily cleaned when the mobile plate of the auxiliary device is connected, the fixed plate being also conveniently reclosable by means of a protective cover which prevents the plate and the female couplings from getting soiled during the period of non-use.

With regards to connecting and disconnecting the mobile plate to/from the fixed plate, this occurs due to a locking handle or lever, easily seizable by the operator, pivotable about a fulcrum integral with the main body to which the fixed plate is connected. Said lever is generally handle-shaped and is hinged to two sides of the fixed plate, each of the two sections of the handle hinged with said plate has a guide or eccentric groove capable of accommodating suitable pins provided on the mobile plate, so that the action of said eccentric groove or cam on the pins moves the mobile plate close to the fixed plate thus facilitating the correct insertion of the couplings and keeping the two plates firmly connected over the entire period of operation, during which time said lever is locked in the lowered position.

As a mechanical safety device, some of the types of multi-coupling plates described heretofore and known from the state of the art have a release button at one of the two hinging points of the handle to the plate, which is to be pressed by the operator to release the lever, so as to move it from the operating position in which the lever keeps the plates in a position of mutual coupling, to the release position in which to proceed with uncoupling the two plates. Similarly, in the step of coupling the two plates, the handle is brought to the closing position and the device with the mechanical safety button snaps into its working position in which it locks the handle.

As long as the operator does not press the release button, mechanical stop elements, such as for example pawls or bushings, prevent the shifting of the lever and therefore the opening of the multiple connection, i.e. the separation of the two plates.

The plates of this type available today on the market cover a vast combination in terms of coupling dimensions and number of lines. Due to this solution, several hydraulic lines may be connected in a single manoeuvre without the risk of reversing them.

However, some drawbacks afflict these multiple plate couplings of known type.

Among these drawbacks, the main one relates to the possibility of connecting and disconnecting the plates when the lines are pressurized, i.e. when there is a pressurized fluid, typically oil but not only, in the hydraulic and/or pneumatic lines. Such a situation is disadvantageous in all circumstances, but especially in the case of a large number of lines and coupling sizes exceeding ½".

A further drawback left unsolved by the multiple coupling plate systems of the type known from the state of the art is the danger of the pressurized disconnection operation. Since the devices of known type do not have further safety devices other than the above-discussed mechanical safety catch for locking the lever, the operator can release the lever also when there are high pressures in the lines, which means that due to the pressures, as soon as the couplings are disconnected, the two plates may be suddenly separated at high speed, which involves just as sudden and quick raising of the lever, which may knock and injure the operator.

A further drawback relates to the possibility of proceeding with the disconnection with a pressurized fluid in the lines, which operation consists in dispersing the working fluid (generally oil, but not only) into the surrounding environment.

A further drawback relates to the fact that the safety systems implemented on multi-plate devices involve reducing the pressure of the liquid circulating in the couplings; this means that the disconnecting operation involves a series of auxiliary operations so that the safety systems reduce the pressure before proceeding with the actual disconnection.

### SUMMARY OF THE INVENTION

It is therefore the main task of the present invention to provide a multi-coupling device which allows to overcome the drawbacks afflicting the solutions of known type.

Within the scope of this task, it is the object of the present invention to provide a multi-coupling device which comprises a drainage system (shunt) for pressurized fluid, integrated in the female couplings of the multi-coupling plate device, thereby allowing the connection/disconnection of the plate without the need to manually reduce the pressure of the fluid beforehand through mechanisms/switches forming part of separate systems or circuits.

Therefore, it is the object of the present invention to provide a multi-coupling plate system in which the shunt system is integrated in the couplings (female), so that the shunt is automatically enabled and disabled when the plate is co n n ected/d i sco n n ected.

It is a further object of the present invention to provide a multi-coupling device which does not allow the closing of the shunt when the plate is disconnected, hence it is not possible to trap pressurized fluid in the fixed plate (female), with apparent benefit in terms of system safety.

This task and these and other objects which shall become more apparent hereinafter are achieved by a multi-coupling device according to the appended claims, which form an integral part of the present description.

### LIST OF THE DRAWINGS

Further features and advantages of the present invention will become more apparent from the following detailed description, provided by way of non-limiting example and shown in the accompanying drawings, in which:
- figure 1 is a perspective view of the multi-coupling plate device according to the present invention;
- figure 2 is a perspective view of the plate device according to the present invention, when connecting it to a mobile plate supporting a plurality of male couplings;
- figure 3 is a sectional view with a longitudinal vertical plane of one of the female couplings of the multi-coupling device in figure 1 in a first pressure discharge position corresponding to a state in which the female coupling is disconnected (from a male coupling) and the shunt line is open;
- figure 4 is the same view as in figure 3, in which the coupling is in the second working position, corresponding to a state in which the female coupling is connected (to a male coupling, also shown in the drawing) and the shunt line is closed.

### DETAILED DESCRIPTION

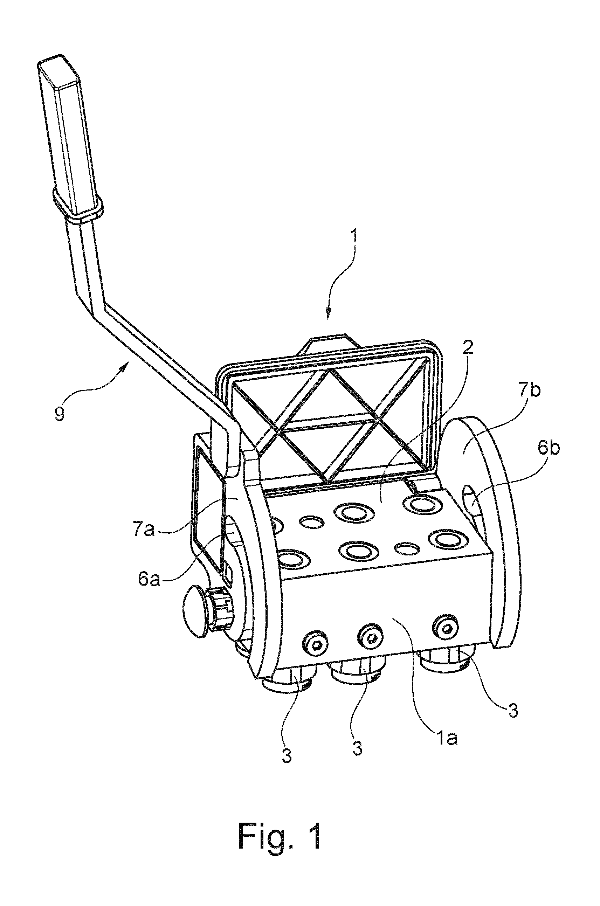

With reference to the accompanying drawings, in particular to figure 1, numeral **1**indicates a multi-coupling device of the plate type according to the present invention, which will also be simply referred to as "fixed plate", comprising a main body **1a** having an upper flat plate-shaped face **2** supporting a plurality of female couplings **3,** preferably of the flat plate type.

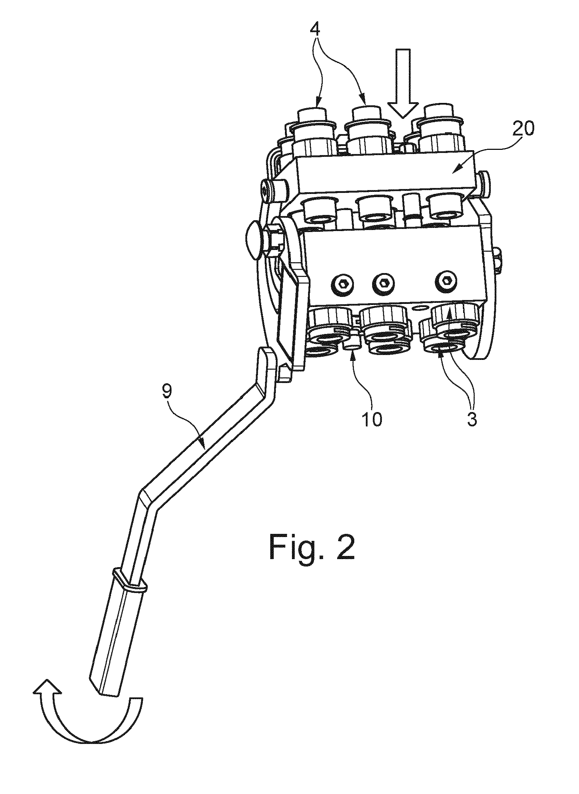

Figure 2 shows a step of connecting the multi-coupling plate device **1** according to the present invention to a mobile plate member **20** supporting a plurality of male couplings. Such a second plate member **20** may be connected to a user, while the fixed plate of the multi-connection device **1** according to the present invention is generally connected to the machine. Thereby, connecting the mobile plate **20** to the fixed plate **1**results in the respective male and female couplings being supported by the two plates thus connecting just as many hydraulic lines.

The multi-coupling device **1** according to the present invention also advantageously comprises a handle **9,** which is rod-shaped in the example shown in the accompanying drawings, hinged to one of the two sides of the main body **1a.**

Handle **9** is adapted to be seized by a user to move the plates **7a, 7b** with cam guide **6a, 6b** which allows clamping the mobile plate **20** onto the fixed plate **1,** as known from the state of the art.

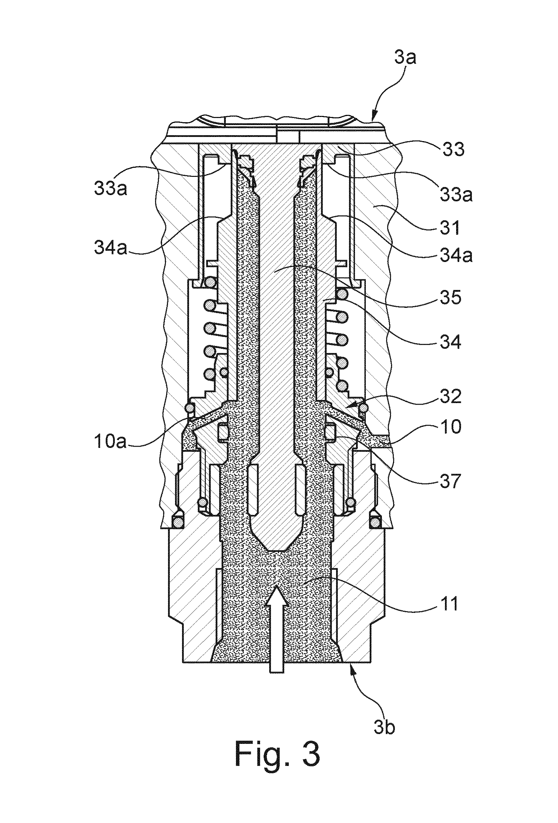

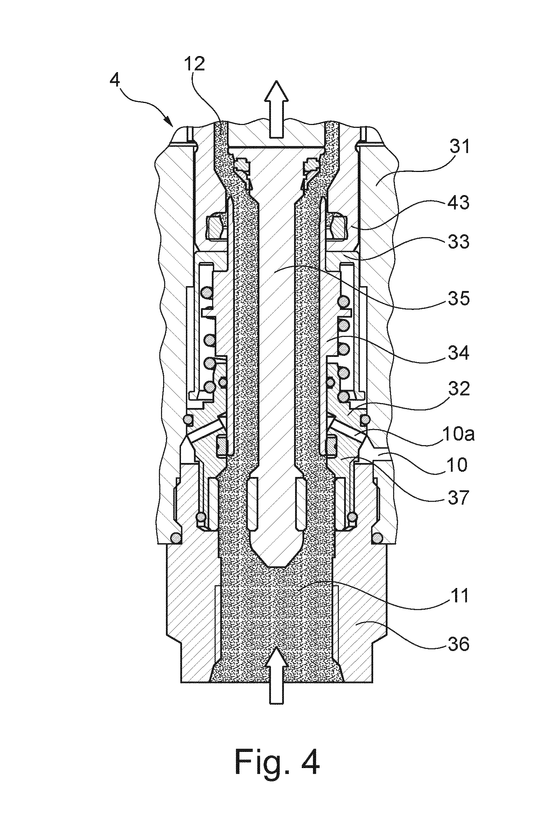

With particular reference to figures 3 and 4, the female couplings **3** of the multi-coupling device **1** according to the present invention comprise means for draining the pressurized fluid into a drainage line.

In particular, said female couplings **3** comprise a hollow cylindrical outer body **31** which may be obtained integral with the plate or a designated member, and said pressurized fluid drainage means, or also simply pressure discharge means, comprise an inner body **32,** defined inside said outer body **31** and coaxial thereto, it also being hollow and cylindrical.

The female coupling **3** axially defines a hydraulic line **11;** such a line extends into the inner body up to the front flat face of the female coupling.

The pressurized fluid (typically oil) flows in line **11,** the fluid being kept in this state by a hydraulic pump system (or equivalent) of the vehicle or apparatus to which device **1** is connected.

A valve body **35** is provided inside the female coupling **3,** the body being adapted to open and close the hydraulic line **11** with the coupling being connected or disconnected, respectively, as known from the state of the art.

Each female coupling **3** has a front part **3a,** which faces outwards and at which the male coupling is inserted, and a back part **3b.** Therefore, each coupling **3** further comprises a back body **36,** which protrudes at the bottom from the main body **1a** of the fixed plate **1** in order to connect the female couplings to the lines on the machine side, and the inner body **32,** integral with said outer body **31** and with said back body **36.**

The means for draining the pressurized fluid into a drainage line of the female coupling **3** of the multi-connection system according to the present invention further comprise, a mobile cursor **34** and an annular abutment body **33** which are axially sliding associated with said outer body **31** and internally associated with the female coupling **3.**

More specifically, said annular abutment body **33** abuts frontally with a similar annular body **43** of a male coupling **4** when the male coupling is connected to the female coupling.

According to the teaching from the state of the art, the valve body of the male pushes the valve body **35** of the female coupling thus determining the hydraulic connection between axial lines **11** and **12** of the female and male couplings, respectively.

With reference to figure 3 in particular, when the female coupling **3** is disconnected from the male coupling **4,** said annular abutment body **33** is in the forward position towards the front part of the coupling (or raised, according to the vertical orientation in figure 3), in which it is flush with the front surface of the female coupling **3.** In this disconnected configuration, the mobile cursor **34** is also in the first position shown in figure 3, in which it is shifted upwards, i.e. towards the front part of coupling **3a.**

Calibrated holes **10a** are obtained inside said inner body **32,** which also has a substantially cylindrical symmetry, and connect the axial hydraulic line **11** of the coupling to an external drainage line **10,** or shunt line, which crosses the outer body **31** thus substantially putting the hydraulic line **11** of each female coupling into communication with that of the other female couplings supported by the fixed plate **1.** Said calibrated holes **10a**form part of the pressure discharge means of the female couplings according to the present invention.

Each of the female couplings **3** is therefore connected to said drainage line **10,** so that the female couplings of the fixed plate **1** are in fact all connected to oneanother by a drainage or shunt line.

When the female coupling **3** is disconnected, as in the state in figure 3, the axially elongated, hollow, cylindrical, mobile cursor **34** is in the first position corresponding to the disconnected coupling, in which it clears the opening of the calibrated holes **10a,** thus putting the hydraulic line **11** of the coupling into communication with the drainage line **10.** Said first position of the pressure discharge means is called shunt position of pressure discharge position.

When, as shown in figure 4, a male coupling **4** is connected to the female coupling **3,** the corresponding annular body **43** of the male coupling, which frontally contacts the front surface of the annular body **33** of the female coupling, pushes the latter downwards, i.e. towards the back part of the coupling, and said annular body **33,** which contacts a corresponding annular abutment surface **34a** of said mobile cursor **34** of the female coupling with the lower annular surface **33a** of the front part, in turn pushes said mobile cursor **34** downwards which closes the opening of the calibrated holes **10a** with the back end thereof (or lower end, when the vertical orientation in figures 3 and 4 is considered), thus accordingly closing the drainage line **10.**

Advantageously, a sealing gasket **37,** preferably an annular gasket, is conveniently provided immediately below said calibrated holes **10a,** i.e. towards the back part **3b** of the coupling with respect to the position of said calibrated holes **10a,** so that when the mobile cursor **34** is in its second working position (shown in figure 4) corresponding to a connected coupling state in which the cursor closes the calibrated holes **10a,** said sealing gasket **37** contacts the outer surface of said mobile cursor **34** and operates the fluid seal thus preventing the fluid from accessing the drainage line **10.**

Due to the mobile cursor **34,** when a male coupling **4** is connected to the female coupling **3,** the drainage line **10** is thus automatically closed because the calibrated holes **10a** connecting the axial line **11** of the female coupling to the drainage line **10** are closed, and the pressurized fluid is guided through the male coupling to feed the user.

The multi-connection device **1** according to the present invention thus allows the couplings to be connected with a drainage line or to short-circuit two or more female couplings with each other, one of which usually representing the inflow line, thereby avoiding the creation of pressure inside the female couplings, also with the hydraulic circuit pump pressurized, when the plates are disconnected.

If, for example, the continuous recirculation of oil is required to lubricate a pump, and hence it is not possible to open the circuit into a drainage line, the multi-connection plate according to the present invention may be provided with the shunt between two female couplings alone, which are therefore connected to each other by the shunt line **10** so that the oil goes to a coupling and returns to the pump flowing through the other coupling, rather than being provided with a drainage line **10** which brings the oil to a storage tank (from which the oil is then recirculated).

The multi-coupling device **1** according to the present invention is therefore particularly versatile because it allows customizations of the multi-coupling plate, according to the customer's needs, while always respecting the primary need to avoid dangerous overpressures in the couplings on the machine side, thus always being simple to be used, easy and quick to be assembled and characterized by small volumes without the need to assemble valves or addition hydraulic systems. Since the shunt system in the device according to the present invention is substantially associated with the specific conformation of the female couplings, the user may indifferently use female couplings provided with pressure discharge means as herein described or traditional female couplings, without said pressurized fluid drainage means. Thereby, the shunt of the pressurized fluid may be carried out among all couplings or among only certain couplings, others being of traditional type.

Therefore, according to a preferred embodiment of the present invention, the multi-coupling plate **1** according to the present invention is provided with a drainage line **10** which may be conveniently connected to an oil storage tank, however, if there is a need to short-circuit between the two couplings, for example, female couplings of the type described herein may be used for these two couplings, provided with pressure discharge means consisting of the shunt line, while traditional couplings may be used in the other positions, without the pressure discharge means or shunt means as described herein, and the drainage line may be conveniently closed, for example with a plug.

Thereby, rather than draining the pressurized fluid from all the female couplings into a storage tank, it is possible to short-circuit two female couplings between each other, thus obtaining a recirculation of fluid on the machine part.

The multi-coupling device of the plate type so conceived and described therefore achieves the task and objects set.

In particular, the device according to the present invention allows to prevent the pressurized fluid from remaining in the female couplings of the fixed plate when the male couplings of the mobile plate are disconnected, i.e. when the hydraulic lines are disconnected and the user is not connected to the fixed plate on the machine side. Thereby, in addition to an apparent benefit in terms of safety, the pressurized fluid in the female couplings is prevented from causing difficulties or hindering the connection of the male couplings.

A further advantage obtained from the present invention consists in having an automatic pressure discharge system which is directly enabled by the insertion of the male couplings into the female couplings, without requiring any intervention by the operator.

Thereby, a further benefit is obtained in terms of safety of the device, as it is error-proof: the operator does not have to remember to enable the pressure discharge means through a switch or other device, rather said means are enabled in an entirely automatic manner.

Further advantages of the solution according to the present invention consist of the multi-coupling device with automatic pressure discharge system being extremely compact, simple to be implemented and assembled, and - something very important because greatly appreciated by users - usable with standard male couplings, hence usable with any type of user already provided with mobile plate with traditional flat-face male couplings.

Again, the multi-coupling device according to the present invention allows, with the plate disconnected, two or more hydraulic lines to be connected, one of which representing the inflow line, without the need to provide a specific drainage line connected to a fluid storage tank.

Not last, a further advantage achieved by the present invention consists in the pressure discharge device being enabled by the same manoeuvre of releasing the plate without the need to enable any dedicated pressure discharge system beforehand.

## Claims

1. Multi-coupling device (1) of the plate type for connecting a plurality of hydraulic and/or pneumatic lines fed with pressurized fluid by means of quick couplings, comprising a main body (1 a) having an upper face shaped as a flat plate (2) connectable to a vehicle or apparatus and supporting a plurality of female couplings (3), each of said female couplings (3) being connected to a hydraulic line and being adapted to be connected to a corresponding male coupling (4) of a second multi-coupling plate (20), said male couplings (4) being in turn connected to a user hydraulic lines for connecting said hydraulic lines by means of said couplings, said device further comprising means for connecting and disconnecting said first plate to/from said second plate, **characterized in that** said main body (1 a) is provided with a drainage line (10), hydraulically connecting said female couplings (3) to a line or tank outside said device, and **in that** one or more of said female couplings (3) is provided with means (10a, 33, 34) for automatically draining said pressurized fluid into said drainage line (10) when said female couplings are disconnected.

2. Multi-coupling device (1) according to the preceding Claim, **characterized in that** said means for the automatic pressure discharge are mobile between a first pressure discharge position corresponding to a disconnected coupling state, and a second working position wherein said pressure discharge means lock said drainage line in a connected coupling state.

3. Multi-coupling device (1) according to the preceding Claim, **characterized in that** said one or more female couplings (3) comprises an outer hollow cylindrical body (31) axially defining an axial hydraulic line (11), and **in that** said pressure discharge means comprise, inside said outer body (31) and coaxial to it, an inner body (32) integral with said outer body (31), comprising in turn one or more calibrated holes (10a) connecting the axial hydraulic line (11) of the coupling (3) to said drainage line (10), said drainage line passing through said inner body (31).

4. Multi-coupling device (1) according to the preceding Claim, **characterized in that** said pressure discharge means further comprise, internally associated to said outer body (31) and axially sliding with respect to it, a mobile cursor (34) and an annular abutment body (33) to abut against the front part of a male coupling (4) and against said mobile cursor (34) when a male coupling is connected to the female coupling (3), thus causing the shift of said mobile cursor (34) when the male coupling is connected.

5. Multi-coupling device (1) according to the preceding Claim, **characterized in that** each of said female couplings (3) comprises a front part (3a), in correspondence of which a male coupling is inserted, and a back part (3b) connected to the hydraulic line.

6. Multi-coupling device (1) according to the preceding Claim, **characterized in that** said mobile cursor (34) is mobile between a first pressure discharge position, corresponding to a disconnected coupling state, wherein said mobile cursor (34) is shifted towards the front part of coupling (3a) and clears the opening of said one or more calibrated holes (10a), and a second working position, corresponding to a connected coupling state, wherein said mobile cursor (34) closes said one or more calibrated holes (10a), thus preventing the pressurized fluid from draining through the drainage line (10).

7. Multi-coupling device (1) according to the preceding Claim, **characterized in that** said pressure discharge means further comprise a sealing gasket (37) arranged towards the back part (3b) of said coupling (3) with respect to said calibrated holes (10a).

8. Multi-coupling device (1) according to the preceding Claim, **characterized in that** when said mobile cursor (34) is in said second working position wherein it closes said one or more calibrated holes (10a), said mobile cursor (34) contacts said sealing gasket (37) in order to obtain a fluid seal and to prevent the pressurized fluid from flowing into the drainage line (10).

9. Multi-coupling device (1) according to one or more of the preceding Claims, **characterized in that** said drainage line (10) is coupled to a fluid storage tank.

10. Female coupling (3) of the kind adapted to be coupled to a corresponding male coupling (4) and comprising an outer hollow cylindrical body (31) axially defining an axial hydraulic line (11), **characterized in that** it comprises means (10a, 33, 34, 32, 37) for automatically draining the pressurized fluid flowing through the axial hydraulic line (11) of the coupling into a drainage line (10) outside said coupling when said female couplings are disconnected from a male coupling, and **in that** said pressure discharge means comprise, inside said outer body (31) and coaxial with respect to it, an inner body (32) integral with said outer body (31), comprising in turn one or more calibrated holes (10a) connecting the axial hydraulic line (11) of coupling (3) to said drainage line (10), said drainage line passing through said inner body (31), said pressure discharge means further comprising a mobile cursor (34) which is internally associated to said outer body (31) and is axially sliding with respect to it and which is axially mobile between a first pressure discharge position, corresponding to a disconnected coupling state, wherein said mobile cursor (34) is shifted towards the front part of the coupling (3a) and clears the opening of said one or more or more calibrated holes (10a), and a second working position corresponding to a connected coupling state, wherein said mobile cursor (34) closes said one or more calibrated holes (10a), thus preventing the pressurized fluid from draining through the drainage line (10).
